# EUROPÄISCHE PATENTANMELDUNG

(11) **EP 3 720 038 A1**
(43) Veröffentlichungstag der Anmeldung: **07.10.2020**
(21) Anmeldenummer: 19166826.8
(22) Anmeldetag: 02.04.2019
(51) Int. Cl.: H04L 9/08, H04L 9/32

(54) **ERSTELLUNG UND VERWALTUNG EINER DIGITALEN SCHLÜSSELZERTIFIKATSKETTE**

(71) Anmelder: Siemens Aktiengesellschaft, 80333 München (DE)
(72) Erfinder: Brockhaus, Hendrik, 85579 Unterbiberg (DE); von Oheimb, David, 85551 Heimstetten (DE)

(57) **Zusammenfassung**

Die Erfindung gibt ein Verfahren zur Erstellung, Verwaltung und Nutzung einer digitalen Schlüsselzertifikatskette (1) auf Entitäten, bei welchem ein erstes Zertifikat (EE) in der Schlüsselzertifikatskette mit einem ersten Ablaufzeitpunkt ausgestellt wird, und das dadurch gekennzeichnet ist, dass mindestens ein zweites Zertifikat (CA1) in der Schlüsselzertifikatskette mit einem zweiten Ablaufzeitpunkt ausgestellt wird, wobei der zweite Ablaufzeitpunkt vor dem ersten Ablaufzeitpunkt liegt oder der Ablaufzeitpunkt des ersten Zertifikates unendlich ist, und wobei das zweite Zertifikat (CA1) ein Zertifikat einer Zertifizierungsinstanz ist.

Die Erfindung gibt außerdem eine digitale Schlüsselzertifikatskette, ein Computerprogrammprodukt und ein computerlesbares Medium an.

## Beschreibung

### Gebiet der Erfindung

Die Erfindung gibt ein Verfahren zur Erstellung und Verwaltung einer digitalen Schlüsselzertifikatskette an. Die Erfindung gibt außerdem eine digitale Schlüsselzertifikatskette, ein Computerprogrammprodukt und ein computerlesbares Medium an.

### Beschreibung des Stands der Technik

Digitale Schlüsselzertifikate binden Angaben über die Identität des Zertifikatsinhabers an einen öffentlichen Schlüssel des Zertifikatsinhabers, wobei der Zertifikatsinhaber auch ein Gerät sein kann. Zertifikate, die die Herkunft eines Gerätes bestätigen, werden auch Herstellerzertifikate genannt. Sie werden vorzugsweise bereits in der Fertigung von Geräten durch den Hersteller aufgebracht und dienen auch als Echtheitsbestätigung für das Gerät. Herstellerzertifikate haben üblicherweise eine Gültigkeitsdauer, die so lang sein sollte wie das Gerät im Feld genutzt wird. Das führt mitunter zu einer sehr langen Gültigkeitsdauer, damit das Gerät dieses Zertifikat während seines gesamten Einsatzzeitraums verwenden kann, beispielsweise als Vertrauensanker zur Anforderung oder Erstellung von weiteren Zertifikaten für den operativen Betrieb. Zudem sollten auch das Zertifikat der ausstellenden Zertifizierungsinstanz (CA) sowie gegebenenfalls weitere Zwischenzertifikate bis hin zum vertrauenswürdigen (selbstsignierten) Root-Zertifikat über einen entsprechend langen Zeitraum gültig sein. Bei industriellen Geräten redet man schnell über eine Lebensdauer im Feld von 30 Jahren und länger.

Für eine erfolgreiche Gültigkeitsprüfung eines Zertifikates müssen zu dem für die Prüfung relevanten Zeitpunkt alle Zertifikate seiner Zertifikatskette gültig sein. Heute wird diese Bedingung in der Regel nach dem so genannten Schalenmodell umgesetzt. Das heißt, dass der Gültigkeitszeitraum jedes CA-Zertifikates die Gültigkeitszeiträume aller von ihr ausgestellten Zertifikate umfassen muss. Typischerweise prüft ein professionelles CA-System bei der Ausstellung eines Zertifikates auch, ob der Gültigkeitszeitraum des auszustellenden Zertifikates vollständig innerhalb des Gültigkeitszeitraums ihres Aussteller-Zertifikates liegt.

Um das Risiko zu begrenzen, dass Zertifikate im Feld genutzt werden, die kompromittiert sind, von einer kompromittierten CA ausgestellt wurden oder einen unsicheren oder gebrochenen Kryptoalgorithmus verwenden, werden Zertifikate meist mit einer begrenzten und kurzen Laufzeit ausgestellt und regelmäßig aktualisiert. Diese Aktualisierung ist bei Herstellerzertifikaten kaum oder gar nicht möglich, da der Hersteller keinen direkten Zugriff auf das Gerät hat. Das Gerät geht mit dem Verkauf in den Besitz des Kunden/Betreibers über, und der Betreiber gewährt in der Regel keinen ausreichenden Zugang, so dass der Hersteller das Herstellerzertifikat regelmäßig aktualisieren könnte. Aus dieser Einschränkung folgt der Wunsch nach sehr langen Zertifikatslaufzeiten.

Zertifikate sollten generell nur für einen Zeitraum ausgestellt werden, über den die ausstellende CA professionell betrieben wird, Statusinformationen zu den ausgestellten Zertifikaten bereitgestellt werden und die genutzten Kryptoalgorithmen ausreichen sicher sind. Da man schwer Aussagen über die kryptographische Stärke von Kryptoalgorithmen weit in die Zukunft treffen kann, ist es risikobehaftet, Zertifikate für eine sehr lange Laufzeit auszustellen. Es könnte auch passieren, dass die Zertifizierungsinstanz während der Gültigkeitsdauer ihres Zertifikates kompromittiert wurde. Im Zweifelsfall müssten dann alle ausgestellten Zertifikate als ungültig angesehen und zurückgerufen werden. Weiterhin ist es nicht immer gegeben, dass in industriellen Anlagen aktuelle Zertifikatsstatusinformationen von den Herstellern der genutzten Geräte zur Verfügung stehen und in den verwendeten Protokollen und Anwendungen Zertifikatsstatusinformationen auch berücksichtigt werden.

Wird nun eine Zertifizierungsinstanz während der Gültigkeit ihres Zertifikats kompromittiert (d.h. es besteht zumindest der begründete Verdacht, dass ein vertraulicher privater Signaturschlüssel unbefugten Dritten bekannt geworden ist oder von ihnen unberechtigt genutzt werden konnte), so können auch alle von dieser Zertifikatsinstanz sowie von allen untergeordneten Instanzen erstellten Zertifikate nicht mehr als vertrauenswürdig betrachtet werden. Dies betrifft auch Herstellerzertifikate, die bereits vor dem frühestmöglichen Zeitpunkt der Kompromittierung erstellt wurden, da ein Angreifer mit Kenntnis des privaten Schlüssels auch Zertifikate mit einem falschen (d.h. einem früheren als dem tatsächlichen) Erstellungszeitpunkt erzeugen kann.

Bei Geräten, die in Anlagen ohne oder nur mit eingeschränktem Zugang zu öffentlichen Netzen eingesetzt werden, ist es wichtig, dass die Gerätezertifikate auch ohne weitere Informationen einfach und schnell auf ihre Gültigkeit hin geprüft werden können. Verfahren wie Certificate Revocation Lists (CRL) oder Online Certificate Status Protocol (OCSP) sind dann eventuell nicht einsetzbar.

Derzeit sind Herstellerzertifikate noch nicht allgemein üblich, ihre Verbreitung nimmt aber stetig zu. Herstellerzertifikate werden derzeit in der Regel mit einer Laufzeit ausgegeben, die die zu erwartende Lebensdauer des Gerätes sicher beinhaltet. Die entsprechenden CA-Zertifikate bekommen wie bereits erwähnt üblicherweise eine noch längere Lebensdauer, da sie die Lebensdauer aller ausgestellten Zertifikate umfassen sollen und nach erster Nutzung noch eine gewisse Zeit genutzt werden sollen.

In Standards wie IETF RFC 5280 und IEEE 802.1AR wird für Herstellerzertifikate von Geräten mit unbegrenzte Lebenszeit auch ein unbestimmter oder 'unendlicher' Ablaufzeitpunkt (= eine im Unendlichem liegender Ablaufzeit) vorgeschlagen. Dieser Ablaufzeitpunkt wird mit dem Gültigkeits-Enddatum 99991231235959Z kodiert, das einer Gültigkeit bis zum Jahr 10000 entspricht. Hier folgt in heutiger Praxis, dass die Zertifikate ihrer Zertifizierungsinstanzen ebenfalls diese im Unendlichen liegende Ablaufzeit bekommen.

Eine sehr lange oder gar unbegrenzte Gültigkeit ist nach menschlichem Ermessen nicht zu überschauen. Zertifizierungsinstanzen, die ihren Betrieb einstellen, sind verpflichtet sicherzustellen, dass keines der von ihnen ausgestellten Zertifikate nach der Einstellung des Betriebes mehr als gültig geprüft werden kann. Deshalb bekommt die Bereitstellung von Zertifikatsstatusinformationen durch die Zertifizierungsinstanzen, deren zeitnahe Verteilung an die Einsatzorte aller Geräte und deren Berücksichtigung durch die Instanzen, die die ausgestellten Zertifikate prüfen, eine sehr große Bedeutung.

Falls eine CA kompromittiert wurde oder ein von ihr verwendeter Kryptoalgorithmus gebrochen wurde, sind folgende Lösungen bekannt oder offensichtlich:
- Gut auf die Hersteller-CA aufpassen und eine Kompromittierung verhindern, so dass dieser Fall möglichst gar nicht erst eintritt.
- Alle Geräte, deren Herstellerzertifikat von einer kompromittierten CA ausgestellt wurden, werden verschrottet und durch neue Geräte mit neuen Zertifikaten ersetzt. Dies ist sehr teuer und aufwändig.
- Die betroffenen Geräte werden zum Hersteller verbracht für eine sichere Erneuerung der Zertifikate. Das ist sehr aufwändig, teuer und äußerst schwer durchführbar, sobald Geräte verkauft sind und der Hersteller damit meist keinen Zugriff mehr hat; ist das Gerät zudem schon in einer Anlage verbaut, so müsste es ausgebaut und ggf. (vorübergehend) durch ein anderes Gerät ersetzt werden.
- Erstellung und Verteilung neuer Zertifikate basierend auf Informationen der Gerätedatenbank beim Hersteller. Diese enthält beispielsweise die öffentlichen Schlüssel der Geräte (siehe Offenlegungsschrift 102014102168 A1, Absatz 0013). Auch hier ist die Verteilung der Gerätezertifikate wieder aufwändig, insbesondere wenn die Geräte schon im Feld sind.
- (Online-) Prüfung der Gültigkeit der CA-Zertifikate durch CRL oder OCSP, falls möglich
- Fest administrierte CA-Zertifikate (Whitelisting der CA-Zertifikate)
- Offenlegungsschrift 102014102168 A1 offenbart, dass das Gerätezertifikat sehr bald nach der Erstellung durch eine weitere Stelle bestätigen zu lassen: "Erstellen einer Bestätigungsinformation, welche bestätigt, dass das Gerätezertifikat (630) von einer autorisierten Instanz erzeugt wurde und/oder Erzeugen eines digital signierten Zeitstempels, welcher das Gerätezertifikat mit dem Zeitpunkt verknüpft, zu dem der Zeitstempel erzeugt wird."
- Die Bestätigung der Gültigkeit eines Zertifikats ist auch schon von OCSP (s.o.) bekannt.
- Auch das Zwischenspeichern und Mitschicken von OCSP Responses (z.B. durch Server, die für ihr eigenes Zertifikat eine OCSP Response vom OCSP Server abfragen und speichern, und diese OCSP Response bei Verbindungsanfragen an die Clients weiterreichen, damit die Clients nicht selbst den OCSP-Server kontaktieren müssen und dort eine erhöhte Last erzeugen) ist bereits bekannt.

Bekannt sind außerdem CA-Hierarchien.

Bekannt ist auch die Erneuerung von Root-CA-Zertifikaten und Sub-CA-Zertifikaten vor Ablauf ihrer Gültigkeitsdauer. Bekannt ist, die Gültigkeitsdauer von (Hersteller-)Zertifikaten bei höheren Sicherheitsanforderungen zu verkürzen.

Bekannt ist, dass sich die Gültigkeitsdauer von (alten) Zertifikaten mit der Gültigkeitsdauer eines erneuerten Zertifikats überlappen kann, so dass für einen gewissen Zeitraum zwei Zertifikate für dieselbe Instanz gültig sind.

Bekannt sind verschiedene Modelle für die Wahl des Gültigkeitszeitraumes und die Signaturprüfung:
- Schalenmodell, wie zuvor beschrieben
- Kettenmodell, alle Zertifikate in einer Kette waren zum jeweiligen Signaturzeitpunkt, der mittels Zeitstempel belegt sein muss, gültig
- Modifiziertes Schalenmodell, alle Zertifikate in einer Kette waren zum Signaturzeitpunkt des letzten Zertifikates, der mittels Zeitstempel belegt sein muss, gültig.

### ZUSAMMENFASSUNG DER ERFINDUNG

Die Aufgabe der Erfindung besteht darin, eine Lösung zur Verbesserung des Stands der Technik bereitzustellen.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung besteht darin, ein Verfahren bereit zu stellen, um die Nutzbarkeit von Zertifikaten indirekt zu verlängern, indem der Gültigkeitszeitraum mindestens eines der zugehörigen CA-Zertifikate verlängert wird.

Die Erfindung beansprucht ein Verfahren zur Erstellung, Verwaltung und Nutzung einer digitalen Schlüsselzertifikatskette auf Entitäten, bei welchem ein erstes Zertifikat in der Schlüsselzertifikatskette mit einem ersten Ablaufzeitpunkt ausgestellt wird. Das Verfahren ist dadurch gekennzeichnet, dass mindestens ein zweites Zertifikat in der Schlüsselzertifikatskette mit einem zweiten Ablaufzeitpunkt ausgestellt wird, wobei der zweite Ablaufzeitpunkt vor dem ersten Ablaufzeitpunkt liegt oder der erste Ablaufzeitpunkt unendlich ist, und wobei das zweite Zertifikat ein Zertifikat einer Zertifizierungsinstanz ist.

Eine Entität (auch Objekt genannt, englisch entity) ist im Zusammenhang der Erfindung ein eindeutig zu bestimmendes Objekt, über das Informationen gespeichert oder verarbeitet werden sollen. Die Entität kann ein technisches Gerät sein.

Ein "unendlicher" Ablaufzeitpunkt bedeutet im Zusammenhang mit der Erfindung, dass der Ablaufzeitpunkt unbestimmt ist.

Die ersten Zertifikate sind langlebige Zertifikate, deren Laufzeit zum Ausstellungszeitraum nicht sicher begrenzt werden kann. Der erste Ablaufzeitpunkt ist somit praktisch nach oben offen. Dies schließt einen unbestimmten (bzw. im Unendlichem liegenden) ersten Ablaufzeitpunkt ein.

Eine sehr lange oder gar unbegrenzte Gültigkeit ist nach menschlichem Ermessen nicht zu überschauen. Zertifizierungsinstanzen, die ihren Betrieb einstellen, sind verpflichtet sicherzustellen, dass keines der von ihnen ausgestellten Zertifikate nach der Einstellung des Betriebes mehr als gültig geprüft werden kann. Deshalb bekommt die Bereitstellung von Zertifikatsstatusinformationen durch die Zertifizierungsinstanzen, deren zeitnahe Verteilung an die Einsatzorte aller Geräte und deren Berücksichtigung durch die Instanzen, die die ausgestellten Zertifikate prüfen, eine sehr große Bedeutung.

Die zweiten Zertifikate haben eine begrenzte Laufzeit, die sicherer überblickt werden kann. Daraus folgt, dass das langlebige erste Zertifikat nach Ablauf des zweiten Zertifikates nicht mehr als gültig prüfbar ist. Die zweiten Zertifikate sind Zertifikate einer Zertifizierungsinstanz (z. B. CA-Zertifikate).

In einer weiteren Ausgestaltung kann das erste Zertifikat ein Herstellerzertifikat sein, das die Herkunft eines Gerätes bestätig.

In einer weiteren Ausgestaltung kann vor Ablauf des zweiten Zertifikates eine Verlängerung geprüft werden und gegebenenfalls ein aktualisiertes zweites Zertifikat mit einem späteren zweiten Ablaufzeitpunkt als dem bisherigen zweiten Ablaufzeitpunkt erstellt werden. Das aktualisierte zweite Zertifikat wird dabei für dasselbe Schlüsselpaar erstellt.

In einer weiteren Ausgestaltung kann das aktualisierte zweite Zertifikat ausgewählten Entitäten bereitgestellt (d.h. verteilt und ggf. installiert) werden, die es zur Prüfung des ersten Zertifikates verwenden. Dies kann zum Beispiel durch einen Mechanismus wie ein reguläres Software-Update erfolgen. Die Entitäten können Geräte sein.

In einer weiteren Ausgestaltung kann ein gegebenenfalls erfolgtes Pinning auf das zweite Zertifikat auf das aktualisierte zweite Zertifikat aktualisiert werden.

In einer weiteren Ausgestaltung kann der erste Ablaufzeitpunkt zum Zeitpunkt der Ausstellung mindestens zehn Jahre in der Zukunft liegen oder unendlich sein.

Die Erfindung bietet den Vorteil, dass der Zeitraum, in dem langlebige Zertifikate (erste Zertifikate) effektiv gültig sind, einerseits anfänglich vorsichtshalber pauschal begrenzt und andererseits bei Bedarf beispielsweise durch ein Software-Update pauschal verlängert werden. Die langlebigen ersten Zertifikate würden nach Ablauf des ursprünglichen zweiten Zertifikats (CA-Zertifikat) ohne Verteilung eines verlängerten zweiten Zertifikats (CA-Zertifikats) nicht mehr als gültig zu prüfen sein, auch ohne dass Zertifikatsstatusinformationen bereitgestellt und genutzt werden müssen.

Dieses Vorgehen enthebt den CA-Betreiber bzw. die Zertifizierungsinstanz aber nicht von der Verpflichtung, während der jeweiligen Laufzeit des zweiten Zertifikates (CA-Zertifikat) Zertifikatsstatusinformation für die ausgestellten Zertifikate bereitzustellen.

Die Erfindung beansprucht außerdem eine digitale Schlüsselzertifikatskette. Die digitale Schlüsselzertifikatskette weist erste Zertifikate mit einem ersten Ablaufzeitpunkt und mindestens ein zweites Zertifikat mit einem zweiten Ablaufzeitpunkt auf, wobei der zweite Ablaufzeitpunkt vor dem ersten Ablaufzeitpunkt liegt oder der erste Ablaufzeitpunkt unendlich ist, und wobei das zweite Zertifikat ein Zertifikat einer Zertifizierungsinstanz ist.

In einer weiteren Ausgestaltung liegt der erste Ablaufzeitpunkt zum Zeitpunkt der Ausstellung mindestens zehn Jahre in der Zukunft oder ist unendlich.

In einer weiteren Ausgestaltung ist die digitale Schlüsselzertifikatskette ausgebildet, ein erfindungsgemäßes Verfahren ausführbar zu machen, d.h. zu ermöglichen.

Die Erfindung beansprucht außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung beansprucht außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand von schematischen Zeichnungen ersichtlich.

Es zeigen
- Fig. 1: eine erste Variante einer Schlüsselzertifikatskette,
- Fig. 2: eine zweite Variante einer Schlüsselzertifikatskette,

### DETAILLIERTE BESCHREIBUNG DER ERFINDUNG

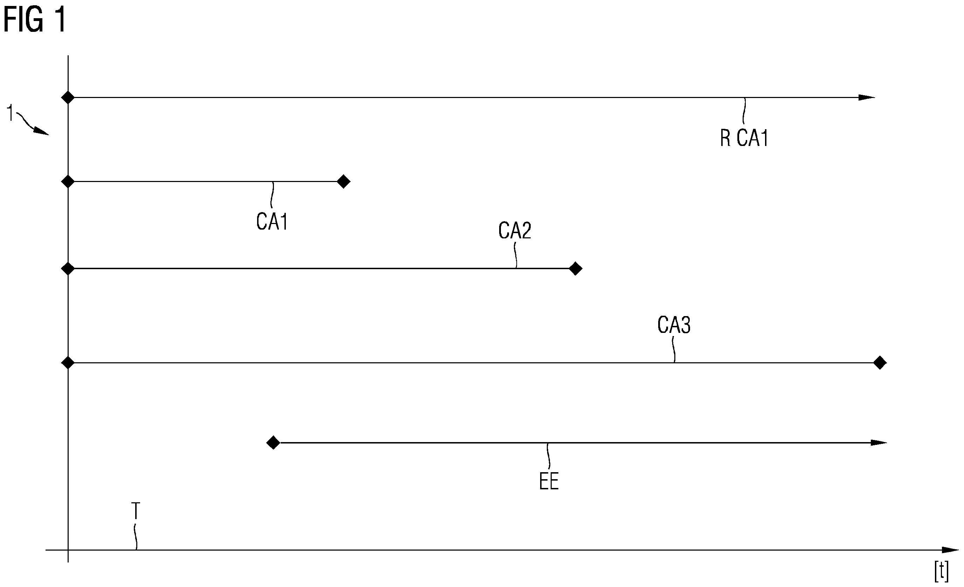

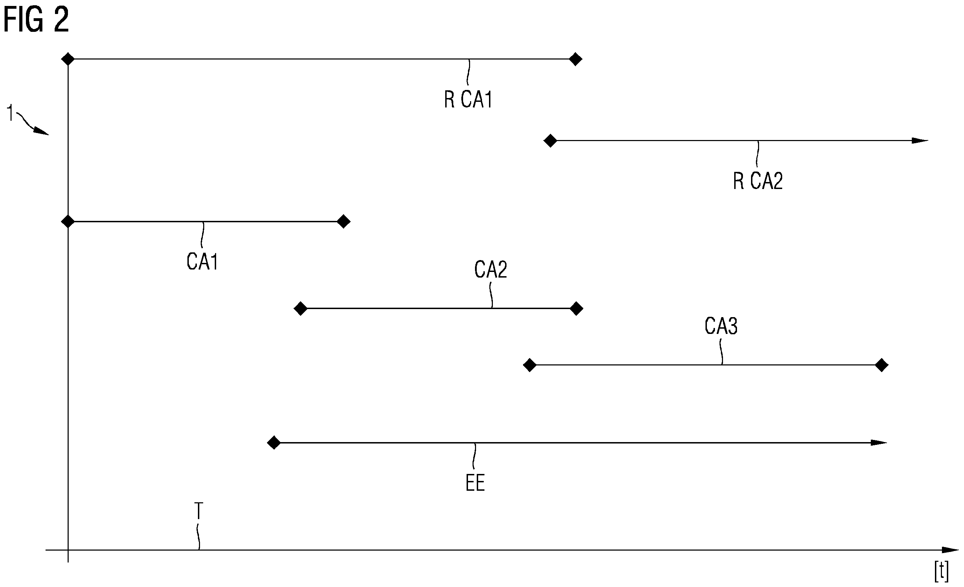

Fig. 1 und Fig. 2 geben Darstellungen möglicher ausgestellter zweiter Zertifikate für denselben öffentlichen CA-Schlüssel (CA = certificate authority, Zertifizierungsinstanz).

In Fig. 1 haben die zweiten Zertifikate (das ursprüngliche CA-Zertifikat CA1, das erste verlängerte CA-Zertifikat CA2 und das zweite verlängerte CA-Zertifikat CA3) denselben Startzeitpunkt ihrer Gültigkeit und unterschiedliche, sukzessive spätere Endzeitpunkte/Ablaufzeitpunkte ihrer Gültigkeit auf der Zeitskala T. Das Root-CA-Zertifikat R CA hat eine lange oder im Beispiel unbegrenzte Gültigkeit und einen im Unendlichem liegenden Ablaufzeitpunkt. Das Zertifikat der End Entity EE (des Endgerätes, das erfindungsgemäße erste Zertifikat) hat ebenfalls eine lange oder im Beispiel unbegrenzte Gültigkeit und einen im Unendlichem liegenden Ablaufzeitpunkt und einen Startzeitpunkt nach dem Startzeitpunkt des ursprünglichen CA-Zertifikats CA1.

In Fig. 2 haben die zweiten Zertifikate (das ursprüngliche CA-Zertifikat CA1, das erste verlängerte CA-Zertifikat CA2 und das zweite verlängerte CA-Zertifikat CA3) unterschiedliche Startzeitpunkte ihrer Gültigkeit, unterschiedliche, überlappende Gültigkeitszeiträume und sukzessive spätere Endzeitpunkte / Ablaufzeitpunkte ihrer Gültigkeit auf der Zeitskala T. Das erste Root-CA-Zertifikat R CA1 hat in diesem Beispiel, anders als in Fig. 1, eine begrenzte Gültigkeit. Kurz vor Ablauf des ersten Root-CA-Zertifikat R CA1 wird ein erneuertes Root-CA-Zertifikat R CA 2 ausgestellt, dessen Ablaufzeitpunkt nach dem Ablauf von CA3 liegt. Es sind verschiedene weitere Kombinationen von Ablaufzeiten der Zertifikate möglich.

Das Zertifikat der End Entity EE (das erfindungsgemäße erste Zertifikat) hat ebenfalls wie in Fig. 1 eine lange oder im Beispiel unbegrenzte Gültigkeit und einen im Unendlichem liegenden Ablaufzeitpunkt und einen Startzeitpunkt nach dem Startzeitpunkt des ursprünglichen CA-Zertifikats CA1.

Obwohl die Erfindung im Detail durch die Ausführungsbeispiele näher illustriert und beschrieben wurde, ist die Erfindung durch die offenbarten Beispiele nicht eingeschränkt, und andere Variationen können vom Fachmann daraus abgeleitet werden, ohne den Schutzumfang der Erfindung zu verlassen.

## Patentansprüche

1. Verfahren zur Erstellung, Verwaltung und Nutzung einer digitalen Schlüsselzertifikatskette auf Entitäten, bei welchem ein erstes Zertifikat (EE) in der Schlüsselzertifikatskette (1) mit einem ersten Ablaufzeitpunkt ausgestellt wird, und das
**dadurch gekennzeichnet ist,**
**dass** mindestens ein zweites Zertifikat (CA1) in der Schlüsselzertifikatskette mit einem zweiten Ablaufzeitpunkt ausgestellt wird, wobei der zweite Ablaufzeitpunkt vor dem ersten Ablaufzeitpunkt liegt oder der erste Ablaufzeitpunkt unendlich ist, und wobei das zweite Zertifikat (CA1) ein Zertifikat einer Zertifizierungsinstanz ist.

2. Verfahren nach Anspruch 1,
**dadurch gekennzeichnet,**
**dass** das erste Zertifikat (EE) ein Herstellerzertifikat, das die Herkunft eines Gerätes bestätig, ist.

3. Verfahren nach einem der vorhergehenden Ansprüche,
**dadurch gekennzeichnet,**
**dass** vor Ablauf des zweiten Zertifikates (CA1) eine Verlängerung geprüft wird und gegebenenfalls ein aktualisiertes zweites Zertifikat (CA2) mit einem späteren zweiten Ablaufzeitpunkt als dem bisherigen zweiten Ablaufzeitpunkt erstellt wird.

4. Verfahren nach Anspruch 3,
**dadurch gekennzeichnet,**
**dass** das aktualisierte zweite Zertifikat (CA2) ausgewählten Entitäten bereitgestellt wird, die es zur Prüfung des ersten Zertifikates (EE) verwenden.

5. Verfahren nach einem der Ansprüche 3 oder 4,
**dadurch gekennzeichnet,**
**dass** ein gegebenenfalls erfolgtes Pinning auf das zweite Zertifikat (CA1) auf das aktualisierte zweite Zertifikat (CA2) aktualisiert wird.

6. Verfahren nach einem der vorhergehenden Ansprüche,
**dadurch gekennzeichnet,**
**dass** der erste Ablaufzeitpunkt zum Zeitpunkt der Ausstellung mindestens zehn Jahre in der Zukunft liegt oder unendlich ist.

7. Digitale Schlüsselzertifikatskette, **aufweisend:**
- erste Zertifikate (EE) mit einem ersten Ablaufzeitpunkt und
- mindestens ein zweites Zertifikat (CA1) mit einem zweiten Ablaufzeitpunkt, wobei der zweite Ablaufzeitpunkt vor dem ersten Ablaufzeitpunkt liegt oder der Ablaufzeitpunkt des ersten Zertifikates unendlich ist, und wobei das zweite Zertifikat (CA1) ein Zertifikat einer Zertifizierungsinstanz ist.

8. Digitale Schlüsselzertifikatskette nach Anspruch 7,
**dadurch gekennzeichnet,**
**dass** der erste Ablaufzeitpunkt zum Zeitpunkt der Ausstellung mindestens zehn Jahre in der Zukunft liegt oder unendlich ist.

9. Digitale Schlüsselzertifikatskette nach Anspruch 8, die ausgebildet ist, ein Verfahren nach einem der Ansprüche 1 bis 6 ausführbar zu machen.

10. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 6 ausgeführt werden, wenn das Computerprogramm auf der Recheneinheit ausgeführt wird.

11. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 6 ausgeführt werden, wenn das Computerprogramm auf der Recheneinheit ausgeführt wird.
